# EUROPEAN PATENT APPLICATION

(11) **EP 0 546 981 A2**
(43) Date of publication of application: **16.06.1993**
(21) Application number: 92630111.0
(22) Date of filing: 10.12.1992
(51) Int. Cl.: H02H 7/08

(54) **Three phase compressor over temperature protection**

(30) Priority: 12.12.1991 US 807026
(71) Applicant: CARRIER CORPORATION, Syracuse New York 13221 (US)
(72) Inventor: Erbs, Daryl G., Kakegawa-shi, Shizuoka-ken, 436 (JP)
(74) Representative: Waxweiler, Jean

(57) **Abstract**

An over temperature protection circuit for a poly-phase compressor motor (10) is provided. One phase of the inverter (14) output has a current sensor (36) associated therewith which is able to detect zero current flow. That same phase of the inverter output to the motor (10) is provided with an overload thermal protection device (34) adapted to open at a temperature designed to protect the motor windings. When the temperature at the overload device (34) reaches the trip point, the overload opens the phase in which both the current detector (36) and overload detector (34) are located. The inverter drive is provided with a signal in response to the current sensor (36) detecting a zero current flow, and turns off the output for all three phases of the inverter (14).

## Description

This invention relates to an over temperature protection circuit for a poly-phase motor in a refrigerant compressor, and more specifically such a system for a variable speed hermetic compressor of the high side type wherein the motor is cooled by high pressure, high temperature refrigerant discharge gas.

Motors used for driving compressors in refrigeration applications make use of a variety of devices to protect the motor against dangerous over heating resulting from overload and failure to start. Quite often, such protective devices are designed for assembly as an integral part of a motor or motor-compressor. Since such protectors carry full motor line current, their size is based on the contact capability adequate to interrupt the stalled current of the motor on continuous cycling. Such thermal protectors are typically made from a bi-metallic material and are adapted to open the circuit when the temperature exceeds a pre-determined value and to automatically reset or close when the temperature falls below the pre-determined value.

Internal thermal protection devices have been found to be not capable of protecting a variable speed hermetic compressor wherein the space in the compressor shell occupied by the motor is on the high side of the system and thus the motor is cooled by high pressure discharge gas. Such a compressor is referred to as a "high side" compressor, and, when the refrigerant used is R-22 extremely high discharge temperatures may be experienced. Such high side compressors having fixed speed motors may be adequately protected by selecting the proper protector rating for the anticipated temperatures to be experienced. However, with a variable speed system wherein the motor may be operating within a range of 30-120 hertz at a rpm of 1800-7200 rpm adequate internal protection cannot be achieved. As an example, consider a system where a thermal overload device is sized to interrupt during high speed, high load conditions, and, given the condition that it is not acceptable for the thermal overload to open during normal operating conditions. The result is, that in this system, the thermal protector sized for high speed, high load will not open at low speed, locked rotor currents.

An over temperature protection circuit for a poly-phase compressor motor is provided. An inverter is provided which is adapted to be connected to a source of DC power for converting the DC power into poly-phase, frequency and voltage controlled, AC power to be used for driving the compressor motor. A current detector, which may be a current transformer or a shunt resistor is installed on one phase of the poly-phase AC power, for detecting the current flowing in that phase and for generating a signal indicative of the detected current value. Thermal protection means are also installed in connection with the same one phase of the poly-phase AC power in the line extending between the inverter and the compressor motor, for interrupting the flow of current in the one phase when a predetermined condition occurs. A control unit is provided which includes means for controlling the frequency and voltage of the AC power provided by the inverter, and, means for receiving the signal indicative of the current value in the one phase. The controller will turn off all phases of the inverter when the signal indicates the current is below a predetermined value. As a result, when the thermal protection means operates to interrupt the flow of current in the one phase, the current detection means will generate the signal indicating low current flow through the one phase and the control will turn off all phases of the inverter.
Figure 1 is a diagrammatic showing of the over temperature protection circuit of the present invention; and
Figure 2 is a flow chart showing a control program in the micro-processor for carrying out the over temperature protection control.

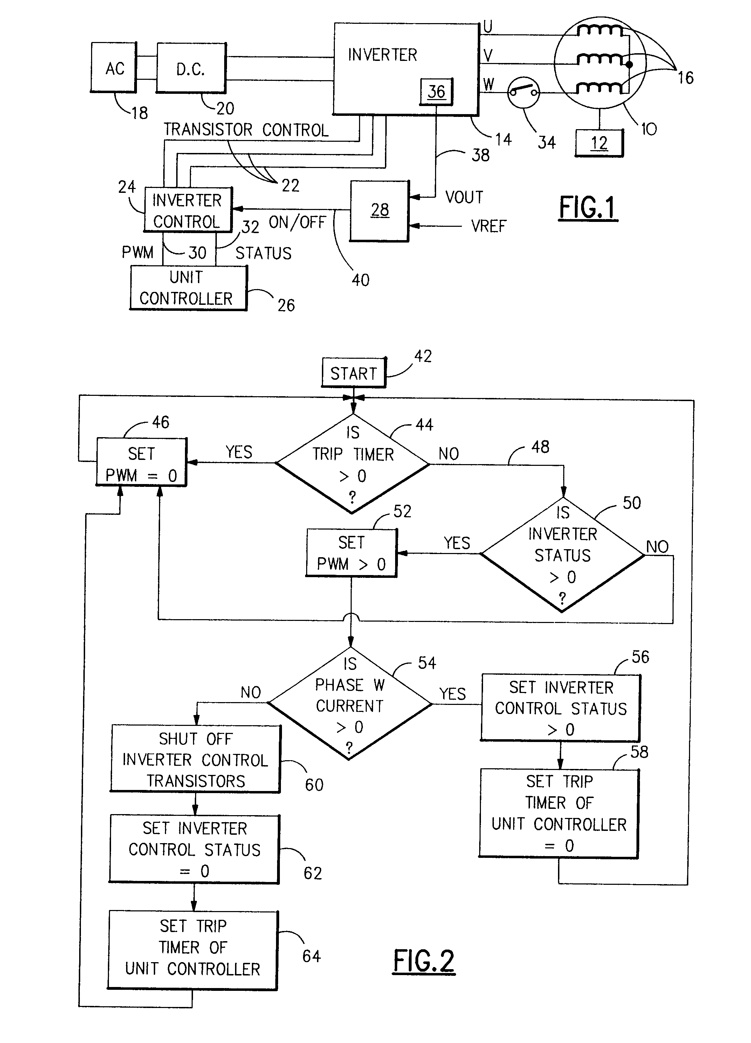

Referring now to Figure 1, reference numeral 10 refers to a three-phase variable speed induction motor in a hermetic rotary compressor for use in an air conditioning system identified generally by reference numeral 12. The motor 10 is driven by an inverter 14 which provides a three- phase frequency and voltage controlled AC power to the compressor motor windings 16. The power to the inverter 14 is provided by an alternating current (AC) power source which is converted to direct current (DC) power through a rectifier 20, as is conventional. The power transistors in the inverter 14 are controlled via control lines 22 by an inverter control 24. The inverter control 24 receives inputs from the unit controller 26 and a comparator 28. The unit controller 26 in such systems typically has numerous inputs and outputs in order to control the air conditioning system in accordance with control programs stored in a microprocessor contained therein. Typical inputs include, signals indicative of system temperatures and pressures. Outputs include signals to actuate motors and control valves. In Figure 1 only those interconnections relevant to the over temperature protection system of the present invention are shown. One wire, 30 is for the pulse width modulated (PWM) signal which, through the inverter control 24 controls the frequency and voltage output of the inverter 14. A second wire 32 allows the inverter control to output a status signal to the unit controller to thereby actuate a device such as an L.E.D. to indicate when the drive status signal is in the "on" state. To facilitate understanding of the control program of Figure 2 it will be explained at this time that when the inverter status is greater than 0 is considered to be in the "on" state.

With continued reference to Figure 1 the output line for phase W from the inverter 14 contains a temperature sensitive overload protector 34 which is sized for the particular system to interrupt current flow through the phase W input to the motor 10 when a predetermined temperature is reached. When this temperature is reached the overload 34, which is typically a bi-metallic overload sensor of the type well known in the art, will open.

Housed within the inverter drive 14 is a current detector means or current sensor 36 which is adapted to detect the flow of current within the phase "W" output line of the inverter. This current detector means may be a low value shunt resistor, or current transformer adapted to sense the flow of current through the phase "W" line and to generate a voltage signal which is proportional to the current flowing through the "W" phase. The signal from the current detector 36 passes through line 38 to the voltage comparator 28. The comparator is set with a reference voltage to which the voltage sensed by the current detector 36 is compared. When the voltage from the detector 36 falls below the reference voltage, the comparator will generate an "off" signal to shut down the inverter control 24 via connection 40. In a system in which the invention has been embodied a reference current of 2 amps has been selected to signal generation of the inverter "off" signal.

The functional operation of the system is very simple. If conditions exist such that the temperature of the motor 10 rises to the point at which the temperature of the overload protector 34 in phase "W" of the inverter output rises to the point at which the overload protector opens, the current detector 36 will then sense zero current as no current is flowing through phase "W". The zero current output will be compared to the reference value in the comparator and will generate an off signal to shut down the inverter control output for all three phases. An inverter off status signal will be delivered to the unit control via 32.

Looking now at Figure 2 the logic which is programmed into the unit controller 26 is illustrated. It should be noted that the trip timer identified in several stages of this program is located in the unit controller 26. It will be appreciated that the interrogations set forth in this flow diagram are taking place continuously and repetitively in the microprocessor when the system is in operation.

Looking now to start 42 the first question asked is whether the trip timer is set at a value greater than zero (44). If the trip timer has any value the system knows that a trip has occurred. As a result the answer is yes and the system proceeds to step 46 to assure that the PWM set at zero and the interrogation is made again. If the answer to the inquiry set forth in step 44 is no, i.e. the trip timer is zero, as indicated by reference numeral 48 the inquiry is made, as set forth in step 50, as to the status of the inverter drive. If the answer to that inquiry is no, i.e. the inverter status is zero, it returns to step 46 to assure that the PWM output is set at zero and the interrogation begins again. If the inverter status is greater than zero, the answer is yes and the logic proceeds to step 52 to assure that the PWM output is set greater than zero thereby assuring a positive input to the inverter drive 14.

Moving down to step 54 knowing that there is a positive input to the inverter drive, the question is asked whether the phase "W" current is greater than zero, if the answer is yes, all is well in the system. The logic then proceeds to steps 56 and 58 to assure that the inverter control status is indicated as being on i.e. greater than zero, and that the trip timer in the unit controller remains set at zero. The interrogation then returns via 60 to the "start" and continues.

Looking back to step 52, if the PWM output is greater than zero, and the step 54 inquiry reveals that the "W" current is zero, then it is indicated that a trip of thermal protector 34 has occurred and that no current is flowing in phase "W". As a result the "no" path is followed and steps 60, 62 and 64 are carried out to shut the system down by sequentially, shutting off the inverter control transistors, setting the inverter control status to zero, and, setting the trip timer of the unit controller 26 at a positive value. All of which results in the PWM output being set at zero (step 46) and the program returns to the start 42 and 44 where the system will remain shut down as long as the trip timer has a positive value.

The trip timer will then count down to zero. Once this is complete, provided the inverter status is greater than zero, the unit control is able to set a non-zero PWM value and restart the compressor. If the thermal protector repetitively opens after each restart, the unit control will not attempt further restarts after a certain number of attempts (3 for this system) until power is reset to the unit. A fault code is also displayed by the control.

## Claims

1. An over temperature protection circuit for a poly- phase compressor motor (10) of the type including a source of D. C. power (20); an inverter connected to said DC power source for converting the DC power into poly- phase, frequency and voltage controlled, AC power (U.V.W.) to be used for driving the compressor motor; current detector means associated with one-phase of said poly- phase AC power, for detecting the current flowing in said one-phase and for generating a signal indicative of the sensed current value; wherein the improvement comprises;
thermal protection means (34) associated with the said one-phase of said poly-phase AC power connected between said inverter (36) and the compressor motor (10), for interrupting the flow of current in said one-phase when a predetermined condition occurs;
a control unit including;
means (24) for controlling the frequency and voltage of the AC power provided by said inverter, means (28) for receiving said signal indicative of the current value in said one-phase, and, for turning off all phases of said inverter when said signal indicates the current is below a predetermined value;
whereby, when said thermal protection means (34) operates to interrupt the flow of current in said one- phase, said current detection means (36) will generate a signal indicating low current flow through said one-phase, and said control (24) will turn off all phases of said inverter.

2. The apparatus of Claim 1 wherein said current detector means (36) is a current transformer, and, said signal is a voltage proportional to the current flowing through said one-phase. flowing through said one-phase.

3. The apparatus of Claim 1 wherein said current detector means (36) is a shunt resistor connected to said one-phase and said signal as a voltage proportional to the current flowing through said one- phase.

4. The apparatus of Claim 1 wherein said predetermined value is 2 amperes.
